# EUROPEAN PATENT APPLICATION

(11) **EP 2 335 820 A1**
(43) Date of publication of application: **22.06.2011**
(21) Application number: 09179886.8
(22) Date of filing: 18.12.2009
(51) Int. Cl.: B01J 20/285, B01J 20/30, B01D 15/20, G01N 30/60

(54) **Method for covalently attaching polymeric monoliths to polyether ether ketone (PEEK) surfaces**

(71) Applicant: Leopold-Franzens-Universität Innsbruck, 6020 Innsbruck (AT)
(72) Inventor: BONN, Guenther, A-6170, Zirl (AT); LIGON, Samuel Clark, A-6020, Innsbruck (AT)
(74) Representative: Bachinger-Fuchs, Eva-Maria

(57) **Abstract**

The present invention provides a method of covalently attaching a polymeric monolith to the internal surface of polyether ether ketone (PEEK) tubing and column housings, comprising the steps of:
(a) reducing the ketone group of the PEEK to a hydroxyl group to obtain a modified PEEK,
(b) optionally reacting the hydroxyl group obtained in step (a) with a compound having an active vinyl group to form a modified PEEK selected from the group of acrylate modified PEEK, methacrylate modified PEEK, styrene modified PEEK and epoxy modified PEEK, and
(c) reacting the modified PEEK obtained in step (a) or (b) with a polymer or polymerization mixture for forming the polymeric monolith.

Hereby, the mechanical stability and solvent durability of larger diameter monolithic columns as well as their overall performance are improved.

## Description

The present invention relates to a method of covalently attaching a polymeric monolith to the internal surface of polyether ether ketone (PEEK) tubing and column housings as well as to chromatographic polyether ether ketone (PEEK) columns with polymeric monoliths.

Porous monoliths first emerged in the early 1990s for use in high performance liquid chromatography (HPLC) [1,2]. These single piece permeable materials provide a number of advantages over traditional packed particle beds in chromatographic applications. The principle advantage of monoliths is the lack of interparticle voids which act essentially as wasted volume within the packed particle column. Although interparticle volume in packed particle systems can be reduced by lowering particle diameter, this also decreases the permeability of the material and thus greatly increases the optimal operating back pressure of the system. One-piece monolithic columns, on the other hand, offer comparable separation efficiencies at substantially lower back pressures.

Two general classes of monolithic columns exist for use in chromatography, namely, organic or polymeric monoliths and inorganic or silica based monoliths [3,4]. Organic and inorganic monoliths can be made in various sizes and shapes, although the separation efficiency of a monolith is often greatly affected by such parameters [5]. Most organic monoliths are formed by polymerization of reactive vinyl (such as styrene, acrylate, methacrylate) monomers with multifunctional vinyl crosslinkers (such as divinyl benzene and ethylene glycol dimethacrylate) in appropriate porogenic solvent systems. The polymerization proceeds in such a manner that a porous gel is formed.

Generally, organic monoliths are formed in capillaries of diameters less than 200 µm and demonstrate excellent performance, and in particular, separate proteins and peptides very efficiently. However, the performance of monoliths made with identical polymerization compositions and under identical conditions is greatly reduced when reactions are performed inside of traditional scale columns (2.0 mm and 4.6 mm ID). These larger diameter monoliths have poorer selectivity, wider and less symmetric peaks, and reduced reproducibility. The diminished chromatographic performance can be explained by system inhomogeneities and also material instability.

One primary reason that organic monoliths perform so much better in microcapillaries is that they are covalently attached to the inner surface of the capillary wall. Covalent attachment of the monolith to the interior column provides stability such that retaining frits (normally used for traditional size packed particle columns) are not required. Microcapillaries have fused silica interior surfaces that may be derivatized with trimethoxy and trichloro silane reagents to attach numerous organic substituents. Often the attached organic substituent contains an acrylate or some other reactive vinyl moiety that may directly participate in polymerization and monolith formation [6, 7]. In this manner the monolith is formed and covalently bound to the interior surface of the capillary in one and the same processing step.

Fused silica capillaries are commercially available with internal diameters up to 500 µm and by special order at 1.0 mm diameter. This and the fact that capillaries with internal diameters beyond 200 µm are very brittle limit the scalability of capillary columns.

Surface silation may also be performed on the internal surface of borosilicate glass tubes, providing a means of covalently attaching monoliths for larger dimension columns. However, the glass tubes are limited at high pressures and tend to leak at column housing interfaces under normal working conditions.

As an alternative, larger dimension monoliths are typically formed directly inside of stainless steel and plastic tubing with no covalent attachment to the interior surface of the column. Surface roughness of the stainless steel and weak noncovalent interaction with plastics are generally sufficient to hold the monolith in place. However, the monolith must be partially swollen with organic solvent for use and can develop side channels at the monolith / side wall interface when operated with aqueous solutions. In addition, the column can decompose and bleed into the detector with successive gradient runs. For these and other reasons, a reliable means of covalently attaching polymer monoliths inside of larger dimension (beyond 500 µm) tubes is needed.

A method for dealing with the problem of "wall channeling" under aqueous conditions is described in US Patent 7473367 where the monolith is first formed inside of a polymeric tube, then shrunk under aqueous or saline conditions, and the column is compressed with piston fittings to physically bind the monolith to the inner wall of the column tube [8].

Polyether ether ketone (PEEK) is a linear thermoplastic with excellent mechanical properties and can be used in a variety of applications [9]. Principal among these applications, PEEK is fabricated into tubes of various dimensions, columns, couplings, and fittings for use in HPLC. Although it is advertised as being solvent and chemical resistant, PEEK may undergo reaction at its surface under certain conditions. In particular, the ketone functional group may undergo a number of transformations such as reduction [10,11] and the aromatic backbone may undergo electrophilic reactions such as sulfonation [12]. Via such reactive chemical methods, polymerizable moieties may be covalently bound to PEEK surfaces [13].

Surface functionalization through wet chemistry methods has been performed on PEEK films as a means of improving protein interactions, for covalently binding polymers to flat surfaces, and as a means of reducing electroosmosis in capillary electrophoresis [14]. In this last case, the authors alter the surface of the interior of PEEK capillaries up to 200 µm. This technology thus provides alternative materials for use in capillary electrophoresis which is usually performed using fused silica capillaries in these dimensions.

It is the object of the invention to overcome the above-mentioned problems and drawbacks and to provide a method for covalently attaching polymeric monoliths to polyether ether ketone (PEEK) surfaces. It is a further object of the invention to provide improved monolithic polyether ether ketone (PEEK) columns having an internal diameter of > 200 µm, which exhibit enhanced performance compared with prior art monolithic columns of the same dimensions.

The above object is achieved by a method of covalently attaching a polymeric monolith to the internal surface of polyether ether ketone (PEEK) tubing and column housings, comprising the steps of:
(a) reducing the ketone group of the PEEK to a hydroxyl group to obtain a modified PEEK,
(b) optionally reacting the hydroxyl group obtained in step (a) with a compound having an active vinyl group to form a modified PEEK selected from the group of acrylate modified PEEK, methacrylate modified PEEK, styrene modified PEEK and epoxy modified PEEK, and
(c) reacting the modified PEEK obtained in step (a) or (b) with a polymer or polymerization mixture for forming the polymeric monolith.

As mentioned above, organic monoliths are used as stationary phases in pharmaceutical quality control and medical diagnostics. The majority of work currently being done with organic monoliths is being performed in microcapillaries with diameters less than 200 µm. Monoliths with larger internal diameters are more problematic to synthesize and one of the reasons for this has been the inability to covalently attach the monolith to the internal surface of the column.

This invention now provides a solution to problems associated with mechanical stability of larger diameter organic monoliths. Covalent attachment of the organic monolith to the inner surface of chemically derivatized PEEK tubing helps advance the use of porous monoliths for use in larger diameter columns for use in chromatography for a variety of medical diagnostic, forensic, environmental, and pharmaceutical applications. The internal diameter of the tubing or column housing can vary from 0.064 mm to 100 mm, although the present invention is specifically advantageous to tubings with diameters > 200 µm

Polyether ether ketone (PEEK) is composed of polymeric chains containing a ketone group for each monomer unit. According to the invention, this ketone group of PEEK undergoes chemical transformation to provide a hydroxyl group. The hydroxyl groups on the internal surface of the plastic tube may then participate directly or be modified with an active vinyl group which may participate in the polymerization and monolith formation. By this process, the monolith is attached to the inner wall of the PEEK tubing or column housing in a manner analogous to monoliths formed inside of fused silica microcapillaries.

According to a preferred embodiment of the invention, step (a) (i.e., the reduction) is carried out with a reducing agent selected from the group of H₂ gas, hydrazine monohydrate, metal hydrides of the general formula AHₓ or MAHₓ, and mixed metal hydrides of the general formula MAHₓR₄₋ₓ, where M = Li, Na or K, A = B or A1, R = alkyl or alkoxy and x < 4.

Another preferred embodiment is characterized in that, in step (b), the compound having an active vinyl group is selected from the group of acryloyl chloride, acryloyl acid, methacryloyl chloride, methacryloyl acid, alkyl acrylate (e.g., C1-C4), alkyl methacrylate (e.g., C1-C4), vinyl benzyl chloride, epichlorohydrin and Bisphenol A glycidyl ether.

The polymerization mixture in step (c) preferably comprises monomers, crosslinkers, solvents, cosolvents and initiators.

Hereby, it is preferred that:
- the monomers are selected from the group of styrene derivatives, preferably styrene, methyl styrene, vinyl benzyl chloride and compounds having general formula CH₂CHAr, where Ar is a substituted or unsubstituted aromatic, acrylates of general formula CH₂CHC(O)OR, where R is a C1-C20 alkyl group, methacrylates of general formula CH₂C(CH₃)C(O)OR, where R is a C1-C20 alkyl group, acrylonitrile, methacrylonitrile, acrylic acid and vinyl pyrrolidinone;
- the crosslinkers are selected from the group of divinyl benzene, divinyl aromatics of general formula CH₂CHArRArCHCH₂, where Ar is a phenyl group and R is an alkyl spacer or an alkylaryl spacer (as described in US 11/419,461) or an alkylsilyl spacer (as described in J. Chromatogr. A 2008, 1191, 253 by Wieder et al.), diacrylates of general formula CH₂CHC(O)OROC(O)CHCH₂, where R is an alkyl spacer, aryl spacer or alkoxy spacer with C1-C30, dimethacrylates of general formula CH₂C(CH₃)C(O)OROC(O)CHCH₂, where R is an alkyl spacer, aryl spacer or alkoxy spacer with C1-C30, triacrylates of general formula R[OC(O)CHCH₂]₃, where R is an alkyl spacer, aryl spacer or alkoxy spacer with C1-C20, and trimethacrylates of general formula R[OC(O)CH(CH₃)CH₂]₃, where R is an alkyl spacer, aryl spacer or alkoxy spacer with C1-C20;
- the solvents and cosolvents are selected from the group of water, C1-C20 alcohols, C1-C20 alkanes, alkyl halides, preferably chloroform, dichloromethane and dichloroethane, ethers, tetrahydrofuran, dioxane, ketones, preferably acetone and cyclopentanone, esters, preferably ethyl acetate and methyl t-butyl ester, amides, preferably dimethylformamide and dimethylacetamide, and aromatics, preferably benzene, chlorobenzene, toluene and xylene;
- the initiators are selected from the group of alkyl peroxides of general formula ROOR, where R = C1-C20, alkoyl peroxides of general formula R(O)COOC(O)R, where R = C1-C20, preferably benzoyl peroxide, peroxy sulfate initiators and reactive azides, preferably azoisobutyronitrile (AIBN).

According to a preferred embodiment of the inventive method, the polymerization mixture in step (c) further comprises dispersion stabilizers selected from the group of surfactants, preferably metal C1-C30 alkyl sulfates and carboxylates, where the metal is Li, Na or K, and polymer stabilizers, preferably polyethylene glycol (PEG) and polyvinylidinone.

Polymerization may be initiated thermally, dependent on the initiator but typically between 50°C and 120°C, by UV irradiation, sonication, gamma radiation or electron beam irradiation. Polymerization time may also vary but will typically be between 30 minutes and 48 hours. Representative polymerization conditions are listed in the examples.

According to a further aspect, the present invention provides a chromatographic polyether ether ketone (PEEK) column with an internal diameter of > 200 µm, which has a polymeric monolith covalently attached to its internal surface.

Suitably, the column has an internal diameter of from 0.064 mm to 100 mm, preferably 0.5 to 10 mm.

Such columns can be obtained by the above method of covalently attaching a polymeric monolith to a polyether ether ketone (PEEK) surface.

Covalent bonding of the polymeric monolith to the column housing improves the mechanical stability and solvent durability of the resultant column. PEEK tubing and column housings are mechanically more rugged than glass and are available in a variety of internal diameters. Principally, PEEK tubing and columns stable to pressures in excess of 200 bar are readily available with internal diameters well beyond those offered by fused silica capillaries, providing a means of producing more stable and reliable polymeric monoliths interfaced with currently used HPLC instruments capable of operating at much higher flow rates.

The polymeric monolith has advantageously additional microstructures or mesoporosity to allow the partitioning of molecules, particularly for use in chromatography and catalysis.

The polymeric monolith within the PEEK tube or column housing may also undergo further reaction, particularly sulfonation and other post-functionalization chemistry, to put cationic or anionic moieties on the monolith for use in electrophoresis, ion exchange, reverse osmosis, and other catalytic flow systems.

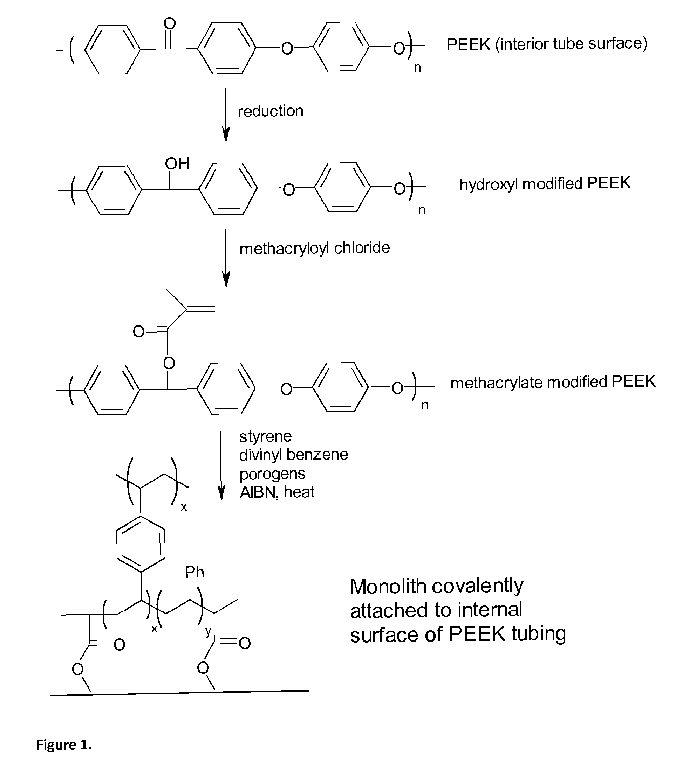

The invention will be described in more detail by Fig. 1 and the following examples.

Fig. 1 illustrates the reaction scheme of an embodiment of the method according to the invention, wherein the PEEK surface is reduced, treated with methacryloyl chloride to form a methacrylate modified PEEK and reacted with a polymerization mixture to form and covalently attach the polymeric monolith.

### Examples

### Example 1

50 cm length of PEEK tubing (1/16" OD 0.75 mm ID) was provided with Finger-Tight end fittings which were then attached to 10/32 stainless steel unions. Using a syringe attached to one of the union end pieces, the column was flushed with 10 mL toluene. The column was then placed in an oven at 100°C for one hour and allowed to cool to room temperature. The column was then filled completely with a reducing agent solution (Red-Al 65% in toluene) and both end piece unions were capped with PEEK hand tight screw plugs. The column was placed in an oven at 100°C and allowed to react for 14 hours. Thereafter, the column was removed from the oven and allowed to cool to room temperature. The end caps were removed from both sides and the column was purged with 20 mL of toluene using a pump with a flow rate gradually increased to 5.0 mL/ min. The column was then purged with 10 mL THF and then air, and allowed to dry at room temperature. The inner wall derivatized material is referred to as hydroxyl modified PEEK tubing.

### Example 2

The hydroxyl modified PEEK tubing described in Example 1 was provided with Finger-Tight end fittings and 10/32 stainless steel unions. The column was then placed in the oven and heated at 100°C for one hour. The column was removed from the oven and allowed to cool to room temperature. The column was then flushed with 5 mL dichloroethane. A solution of methacryloyl chloride (1.0 mL, 10.3 mmol) and triethylamine (1.5 mL, 10.7 mmol) was prepared in 8.0 mL dichloroethane. This solution was added via syringe through one of the column end unions. The column was flushed and then filled with the solution and capped on both ends. The capped column was heated at 40°C for three hours and then cooled to room temperature. The column end caps were removed, the column was flushed with 20 mL THF and then air, and allowed to dry at room temperature. This inner wall derivatized material is referred to as methacrylate modified PEEK tubing.

### Example 3

The hydroxyl modified PEEK tubing described in Example 1 was provided with Finger-Tight end fittings and 10/32 stainless steel unions. The column was then placed in the oven and heated at 100°C for one hour. The column was removed from the oven and allowed to cool to room temperature. The column was then flushed with 5 mL dichloroethane. A solution of acryloyl chloride (1.0 mL, 11.9 mmol) and triethylamine (1.7 mL, 12.1 mmol) was prepared in 8.0 mL dichloroethane. This solution was added via syringe through one of the column end unions. The column was flushed and then filled with the solution and capped on both ends. The capped column was heated at 40°C for three hours and then cooled to room temperature. The column end caps were removed, the column was flushed with 20 mL THF and then air, and allowed to dry at room temperature. This inner wall derivatized material is referred to as acrylate modified PEEK tubing.

### Example 4

A polymerization mixture was prepared of the following composition. Divinyl benzene (technical grade 55%) (0.40 mL), styrene (0.40 mL), decanol (1.00 mL), toluene (0.20 mL), and 20 mg AIBN were placed in a vial, vortexed to homogenize and degassed for five minutes. The polymer mixture was then transferred via syringe to a 25 cm long section of the methacrylate modified column described in Example 2. The column was flushed and then filled with the polymer mixture. Both ends of the column were capped and the column was placed in an oven and heated at 70°C for 16 hours. After this time, the column was removed from the oven and allowed to cool to room temperature. The end fittings were removed from the column and 3 cm were trimmed from either end of the tubing. A 15 cm long section of tubing was cut from the remaining tubing and provided with Finger-Tight end fittings and 10/32 stainless steel unions. This column was attached to a pump and flushed with 10 mL THF, starting with a flow rate of 0.1 mL/ min, then gradually increasing so as not to exceed a back pressure of 200 bars.

### Example 5

A polymerization mixture was prepared of the following composition. 1,2 Bis(p-vinylphenyl)ethane (322 mg), methylstyrene (0.360 mL), decanol (1.00 mL), toluene (0.280 mL), and 20 mg AIBN were placed in a vial, sonicated with mild heating to homogenize and degassed for five minutes. The polymer mixture was then transferred via syringe to a 25 cm long section of the methacrylate modified column described in Example 2. The column was flushed and then filled with the polymer mixture. Both ends of the column were capped and the column was placed in an oven and heated at 65°C for 24 hours. After this time, the column was removed from the oven and allowed to cool to room temperature. The end fittings were removed and 3 cm were trimmed from either end of the tubing. A 15 cm long section of tubing was cut from the remaining tubing and provided with Finger-Tight end fittings and 10/32 stainless steel unions. This column was attached to a pump and flushed with 10 mL THF, starting with a flow rate of 0.1 mL/ min, then gradually increasing so as not to exceed 200 bars.

### Example 6

30 cm length of PEEK tubing (1/8" OD 2.00 mm ID) was provided with Finger-Tight end nuts which were then attached to 1/8" to 1/16" PEEK reducing unions. Using a syringe attached to one of the union end pieces, the column was flushed with 12 mL toluene. The column was then placed in an oven at 100°C for one hour and allowed to cool to room temperature. The column was then filled completely with a reducing agent solution (Red-Al 65% in toluene) and both end piece unions were capped with PEEK hand tight screw plugs. The column was placed in an oven at 100°C and allowed to react for 14 hours. After this, the column was removed from the oven and allowed to cool to room temperature. The end caps were removed from both sides and the column was purged with 25 mL of toluene using a pump with a flow rate gradually increased to 5.0 mL/ min. The column was purged with 12 mL THF and then air, and allowed to dry at room temperature. The inner wall derivatized material is referred to as hydroxyl modified PEEK tubing.

### Example 7

The hydroxyl modified PEEK tubing described in Example 6 was provided with Finger-Tight end fittings which were attached to 1/8" to 1/16" PEEK reducing unions. The column was then placed in the oven and heated at 100°C for one hour. The column was removed from the oven and allowed to cool to room temperature. The column was then flushed with 8 mL dichloroethane. A solution of methacryloyl chloride (1.0 mL, 10.3 mmol) and trietnylamine (1.5 mL, 10.7 mmol) was prepared in 8.0 mL dichloroethane. This solution was added via syringe through one of the column end unions. The column was flushed, filled with the polymerization solution and then capped on both ends. The capped column was heated at 40°C for three hours and then cooled to room temperature. The column end caps were removed, the column was flushed with 25 mL THF and then air, and allowed to dry at room temperature. This inner wall derivatized material is referred to as methacrylate modified PEEK tubing.

### Example 8

A polymerization mixture was prepared of the following composition. Divinyl benzene (technical grade 55%) (0.80 mL), styrene (0.80 mL), decanol (2.00 mL), toluene (0.50 mL), and 40 mg AIBN were placed in a vial, vortexed to homogenize and degassed for five minutes. The polymer mixture was then transferred via syringe to the methacrylate modified column described in Example 7. The column was flushed and then filled with the polymer mixture. Both ends of the column were capped and the column was placed in an oven and heated at 70°C for 16 hours. After this time, the column was removed from the oven and allowed to cool to room temperature. The end fittings were removed from the column and 3 cm were trimmed from either end of the tubing. A 12.5 cm long section of tubing was cut from the remaining tubing and provided with Finger-Tight end fittings and reducing unions. This column was attached to a pump and flushed with 20 mL THF, starting with a flow rate of 0.2 mL/ min, then gradually increasing.

### References:

[1] Svec, F.,;Frechet, J.M.J. Anal. Chem. 1992, 64, 820.
[2] Frechet, J.M.J.;Svec, F. US Patent 5334310 1994*.*
[3] Nunez, O.; Nakanishi, K.; Tanaka, N. J. Chromatogr. A 2008, 1191, 231.
[4] Unger, K.K.; Skudas, R.; Schulte, M.M. J. Chromatogr. A 2008, 1184, 393.
[5] Peters, E.C.; Svec, F.; Frechet, J.M.J. Chem. Mater. 1997, 9, 1898.
[6] Gusev, I.; Huang, X.; Horvath, C. J. Chromatogr. A 1999, 855, 273.
[7] Bisjak, C.P.; Trojer, L.; Lubbad, S., Wieder, W.; Bonn, G.K. J. Chromatogr. 2007,1146, 216.
[8] Xis, S. US Patent 7473367 2009*.*
[9] May, R. in Encyclopedia of Polymer Science and Engineering, 2nd ed.; John Wiley: New York, 1998; Vol. 12.
[10] Franchina, N.L.; McCarthy, T.J. Macromolecules 1991, 24, 3045.
[11] Noiset, O., Schneider, Y.J.; Marchand-Brynaert, J. J. Polym. Sci.: Part A: Polym. Chem. 1997, 35, 3779.
[12] Yen, S.P.S.; Narayanan, S.R.; Halpert, G.; Graham, E.; Yavrouian, A. US Patent 5795496 1998.
[13] Yameen, B.; Alvarez, M.; Azzaroni, O.; Jonas, U.; Knoll, W. Langmuir, DOI 10.1021/1a900010Z 2009.
[14] Engelhardt, H.; Schmidt, T.; Konstantin, S. JP Patent 07225218 1995.
[15] Tsujioka, N; Hira, N.; Aoki, S.; Tanaka, N.; Hosoya, K. Macromolecules 2005, 24, 9901.
[16] Bonn, G.; Lubban, S.; Trojer, L. US Patent App. 11/ 419461 2007.
[17] Wieder, W., Lubbad, S.; Trojer, L.; Bisjak, C.; Bonn, G. J. Chromatogr. A 2008, 1191, 253.

## Claims

1. A method of covalently attaching a polymeric monolith to the internal surface of polyether ether ketone (PEEK) tubing and column housings, comprising the steps of:
(a) reducing the ketone group of the PEEK to a hydroxyl group to obtain a modified PEEK,
(b) optionally reacting the hydroxyl group obtained in step (a) with a compound having an active vinyl group to form a modified PEEK selected from the group of acrylate modified PEEK, methacrylate modified PEEK, styrene modified PEEK and epoxy modified PEEK, and
(c) reacting the modified PEEK obtained in step (a) or (b) with a polymer or polymerization mixture for forming the polymeric monolith.

2. The method of claim 1, wherein step (a) is carried out with a reducing agent selected from the group of H₂ gas, hydrazine monohydrate, metal hydrides of the general formula AHₓ or MAHx, and mixed metal hydrides of the general formula MAHₓR₄₋ₓ, where M = Li, Na or K, A = B or A1, R = alkyl or alkoxy and x < 4.

3. The method of claim 1 or 2, wherein in step (b) the compound having an active vinyl group is selected from the group of acryloyl chloride, acryloyl acid, methacryloyl chloride, methacryloyl acid, alkyl acrylate, alkyl methacrylate, vinyl benzyl chloride, epichlorohydrin and Bisphenol A glycidyl ether.

4. The method of any of claims 1 to 3, wherein the polymerization mixture in step (c) comprises monomers, crosslinkers, solvents, cosolvents and initiators.

5. The method of claim 4, wherein the monomers are selected from the group of styrene derivatives, preferably styrene, methyl styrene, vinyl benzyl chloride and compounds having general formula CH₂CHAr, where Ar is a substituted or unsubstituted aromatic, acrylates of general formula CH₂CHC(O)OR, where R is a C1-C20 alkyl group, methacrylates of general formula CH₂C(CH₃)C(O)OR, where R is a C1-C20 alkyl group, acrylonitrile, methacrylonitrile, acrylic acid and vinyl pyrrolidinone.

6. The method of claim 4, wherein the crosslinkers are selected from the group of divinyl benzene, divinyl aromatics of general formula CH₂CHArRArCHCH₂, where Ar is a phenyl group and R is an alkyl spacer, alkylaryl spacer or alkylsilyl spacer, diacrylates of general formula CH₂CHC(O)OROC(O)CHCH₂, where R is an alkyl spacer, aryl spacer or alkoxy spacer with C1-C30, dimethacrylates of general formula CH₂C(CH₃)C(O)OROC(O)CHCH₂, where R is an alkyl spacer, aryl spacer or alkoxy spacer with C1-C30, triacrylates of general formula R[OC(O)CHCH₂]₃, where R is an alkyl spacer, aryl spacer or alkoxy spacer with C1-C20, and trimethacrylates of general formula R[OC(O)CH(CH₃)CH₂]₃, where R is an alkyl spacer, aryl spacer or alkoxy spacer with C1-C20.

7. The method of claim 4, wherein the solvents and cosolvents are selected from the group of water, C1-C20 alcohols, C1-C20 alkanes, alkyl halides, preferably chloroform, dichloromethane and dichloroethane, ethers, tetrahydrofuran, dioxane, ketones, preferably acetone and cyclopentanone, esters, preferably ethyl acetate and methyl t-butyl ester, amides, preferably dimethylformamide and dimethylacetamide, and aromatics, preferably benzene, chlorobenzene, toluene and xylene.

8. The method of claim 4, wherein the initiators are selected from the group of alkyl peroxides of general formula ROOR, where R = C1-C20, alkoyl peroxides of general formula R(O)COOC(O)R, where R = C1-C20, preferably benzoyl peroxide, peroxy sulfate initiators and reactive azides, preferably azoisobutyronitrile (AIBN).

9. The method of any of claims 1 to 3, wherein the polymerization mixture in step (c) further comprises dispersion stabilizers selected from the group of surfactants, preferably metal C1-C30 alkyl sulfates and carboxylates, where the metal is Li, Na or K, and polymer stabilizers, preferably polyethylene glycol (PEG) and polyvinylidinone.

10. A chromatographic polyether ether ketone (PEEK) column with an internal diameter of > 200 µm, **characterized in that** it has a polymeric monolith covalently attached to its internal surface.

11. The chromatographic polyether ether ketone (PEEK) column of claim 10, wherein it has an internal diameter of from 0.064 mm to 100 mm, preferably 0.5 to 10 mm.
